# EUROPÄISCHE PATENTSCHRIFT

(11) **EP 2 986 560 B1**
(45) Veröffentlichungstag und Bekanntmachung des Hinweises auf die Patenterteilung: **15.06.2022**
(21) Anmeldenummer: 14719699.2
(22) Anmeldetag: 17.04.2014
(51) Int. Cl.: C01D 15/00, C01B 21/06, C01B 21/092, H01M 4/134, H01M 4/36, H01M 4/38, H01M 4/62, B22F 1/16

(54) **STABILISIERTE MIT EINER STICKSTOFFHALTIGEN SCHALE BESCHICHTETE LITHIUMMETALLABFORMUNGEN UND VERFAHREN ZU DEREN HERSTELLUNG**
STABILISED LITHIUM METAL FORMATIONS COATED WITH A SHELL CONTAINING NITROGEN, AND A METHOD FOR THE PRODUCTION OF SAME
MOULAGES À BASE DE LITHIUM MÉTAL REVÊTUS D'UNE COUCHE CONTENANT DE L'AZOTE ET PROCÉDÉ DE PRODUCTION DESDITS MOULAGES

(30) Priorität: 19.04.2013 DE 102013006724
(43) Veröffentlichungstag der Anmeldung: 24.02.2016
(73) Patentinhaber: Albemarle Germany GmbH, 65926 Frankfurt am Main (DE)
(72) Erfinder: WIETELMANN, Ulrich, 61381 Friedrichsdorf (DE); HARTNIG, Christoph, 65817 Eppstein (DE); EMMEL, Ute, 65929 Frankfurt am Main (DE); NICKEL, Vera, 35708 Haiger (DE)
(74) Vertreter: Uexküll & Stolberg
(86) Internationale Anmeldenummer: PCT/EP2014/057886
(87) Internationale Veröffentlichungsnummer: WO 2014/170429

(56) Entgegenhaltungen:
- WO-A1-2013/055573
- US-A- 2 910 347
- US-A- 4 229 354
- US-A1- 2008 160 291
- US-A1- 2010 156 353
- MEIFEN WU ET AL: "Electrochemical behaviors of a LiN modified Li metal electrode in secondary lithium batteries", JOURNAL OF POWER SOURCES, ELSEVIER SA, CH, Bd. 196, Nr. 19, 16. Mai 2011 (2011-05-16) , Seiten 8091-8097, XP028241173, ISSN: 0378-7753, DOI: 10.1016/J.JPOWSOUR.2011.05.035 [gefunden am 2011-05-27]
- MARSHALL M: "Microencapsulation of lithium", DTIC-TR: DEFENSE TECHNICAL INFORMATION CENTER. TECHNICAL REPORT, X, XX, Bd. ADA162987, 1. Januar 1985 (1985-01-01) , Seiten 1-30, XP009096490,

## Beschreibung

Beschrieben werden partikelförmige mit einer stickstoffhaltigen Beschichtung stabilisierte Lithiummetall-Kompositmaterialien mit Kern/Schale-Struktur sowie Verfahren zu deren Herstellung.

Lithium gehört zu den Alkalimetallen. Wie auch die schwereren Elementhomologa der ersten Hauptgruppe ist es durch ein starkes Reaktionsvermögen gegenüber einer Vielzahl von Stoffen gekennzeichnet. So reagiert es heftig, häufig unter Entzündung mit Wasser, Alkoholen und anderen Stoffen, die protischen Wasserstoff enthalten. An Luft ist es unbeständig und es reagiert mit Sauerstoff, Stickstoff und Kohlendioxid. Es wird deshalb normalerweise unter Inertgas (Edelgase wie Argon) gehandhabt und/oder unter einer schützenden Schicht aus Paraffinöl gelagert.

Des Weiteren reagiert es mit vielen funktionalisierten Lösungsmitteln, selbst wenn diese keinen protischen (sauren, positiv polarisierten) Wasserstoff enthalten. Beispielsweise werden zyklische Ether wie THF unter Ringspaltung geöffnet, Ester und Carbonylverbindungen werden lithiiert und/oder reduziert. Häufig wird die Reaktion zwischen den genannten Chemikalien bzw. Umweltstoffen durch Wasser katalysiert. So kann Lithiummetall in trockener Luft über längere Zeiträume gelagert und verarbeitet werden, da es eine einigermaßen stabile Passivierungsschicht ausbildet, die weitergehende Korrosion verhindert. Mit trockenem Stickstoff reagiert Lithium bei Raumtemperatur nur sehr langsam. Ähnliches gilt für funktionalisierte Lösemittel, beispielsweise N-Methyl-2-pyrrolidon, welches in wasserfreier Form wesentlich weniger reaktiv gegenüber Lithium ist als z.B. mit Wassergehalten > einige 100 ppm.

Um die Lagerfähigkeit von Lithiummetall und die Sicherheit bei der Verarbeitung zu erhöhen, wurde eine Reihe von korrosionsvermindernden Beschichtungs-verfahren entwickelt. So ist es beispielsweise aus US 5,567,474 und US 5,776,369 bekannt, geschmolzenes Lihiummetall mit CO₂ zu behandeln. Für die Beschichtung wird typischerweise flüssiges Lithium in einem inerten Kohlenwasserstoff mindestens 1 Minute mit mindestens 0,3 Mol % CO₂ in Verbindung gebracht. Der damit bewirkte Schutz reicht aber für viele Anwendungen, speziell für die Vorlithiierung von Batterieelektrodenmaterialien in N-Methyl-2-pyrrolidon (NMP)-Suspension, nicht aus.

Eine weitere Methode, Lithiummetall zu stabilisieren besteht darin, es über seinen Schmelzpunkt zu erhitzen, das geschmolzene Lithium zu rühren und es mit einem Fluorierungsmittel, beispielsweise Perfluoropentylamin, in Kontakt zu bringen (WO 2007/005983 A2). Nachteilig ist, dass Fluorierungsmittel häufig giftig oder ätzend sind und deshalb in der industriellen Praxis ungern eingesetzt werden.

Aus dem Dokument WO 2008/045557 A1 ist ein Verfahren zur schützenden Oberflächenbehandlung von Lithiummetall bekannt, welches darin besteht, Lithiummetall mit einer Wachsschicht, beispielsweise einem Polyethylenwachs zu beschichten. Nachteilig ist, dass relativ viel Beschichtungsmittel aufzuwenden ist. In den Beispielen der genannten Patentanmeldung etwa 1 Gew.%.

US 2008/0283155 A1 beschreibt ein Verfahren zur Stabilisierung von Lithiummetall, das durch folgende Schritte gekennzeichnet ist:
a) Erhitzen von Lithiummetall über den Schmelzpunkt, um geschmolzenes Lithiummetall herzustellen,
b) Dispergieren des geschmolzenen Lithiummetalls; und
c) Inkontaktbringen des geschmolzenen Lithiummetalls mit einer Phosphor enthaltenden Substanz, um eine im wesentlichen kontinuierliche Schutzschicht von Lithiumphosphat auf dem Lithiummetallpulver zu erzeugen. Das Hantieren mit sauren, ätzenden Stoffen (Phosphorsäure) generell und insbesondere in Gegenwart von Lithiummetall ist nachteilig, denn die beiden Stoffe reagieren beim Inkontaktbringen sehr heftig unter erheblicher Wärmefreisetzung miteinander. Darüber hinaus entsteht bei der Umsetzung von Lithiummetall mit Phosphorsäure Wasserstoffgas.

In US 2009/0061321 A1 wird vorgeschlagen, ein stabilisiertes Lithiummetallpulver mit einer im Wesentlichen kontinuierlichen Polymerbeschichtung herzustellen. Das Polymer kann ausgewählt sein aus der Gruppe Polyurethane, PTFE, PVC, Polystyrol u.a. Nachteilig an diesem Verfahren ist, dass das geschützte Lithiummetall eine undefinierte Oberflächenbeschichtung organischer Substanzen bekommt, die bei seiner nachfolgenden Verwendung, beispielsweise für die Vorlithiierung von Elektrodenmaterialien, stören können.

Im Dokument WO2012/052265 wird ein stabilisiertes, reines Lithiummetallpulver beschrieben, bei dem Lithiummetallpulver in einem organischen inerten Lösungsmittel unter Dispergierbedingungen mit Fettsäuren oder Fettsäureestern passiviert wird und es einen Natriumgehalt < 200 ppm, bevorzugt < 100ppm aufweist,. Ein derartig hergestelltes Material weist eine carbonathaltige (Li₂CO₃) Oberflächenbeschichtung auf. Sauerstoffhaltige Lithiumsalze sind dafür bekannt, dass sie elektronische Isolatoren sind, d.h. dass der Ladungstransport durch solchermaßen zusammengesetzte Grenzschichten kinetisch gehemmt ist.

Weiterhin ist eine Anode für eine elektrochemische Zelle bekannt, die ein metallisches Material mit einer sauerstoffhaltigen Beschichtung enthält und mit einer weiteren Schutzschicht, welche durch Umsetzung von D- oder P-Block-Precursoren mit dieser sauerstoffhaltigen Schicht entsteht, versehen ist (WO 2010/101856 A1, US 2007/0082268 A1, US 2009/0220857 A1). Die Schutzschicht des Metallanodenmaterials wird durch Behandlung eines metallischen Materials, welches eine sauerstoffhaltige Beschichtung aufweist, mit mindestens zwei Verbindungen hergestellt. Dabei ist die erste Verbindung eine große Molekülverbindung und die zweite Verbindung eine kleine Molekülverbindung (US 7,776,385 B2, US 2011/0104366 A1). Bei dieser Art der Schutzschichtbildung reagieren sauerstoffhaltige Oberflächengruppen (beispielsweise Hydroxyfunktionen) mit den D- oder P-Blockprecursoren, beispielsweise einem Kieselsäureester, in einem nichthydrolytischen Sol-Gel Prozess miteinander und es bildet sich auf der Anodenoberfläche ein Film bestehend aus SiO₂. Die chemischen Reaktionen können wie folgt formuliert werden (G.A. Umeda et al. J.Mater. Chem. 2011, 21, 1593-1599):

LiOH + Si(OR)₄ → LiOSi(OR)₃ + ROH

SiOR + ROSi → Si-O-Si + ROR

(Si = Silylrest mit drei Substituenten, beispielsweise Methyl)

Nachteilig an diesem Verfahren ist, dass es mehrstufig ist, d.h. zunächst wird das metallische Material, beispielsweise Lithiummetall, mit einer sauerstoffhaltigen Schicht versehen und dann nacheinander mit zwei verschiedenen Molekülverbindungen (D- oder P-Block-Precursoren umgesetzt.

US 4 229 354 offenbart ein Verfahren wobei Lithiumpartikeln in eine THF-Lösung suspendiert und mit Stickstoff in Kontakt gebracht werden.

Schließlich beschreibt die US2012/0003532 eine geschützte Metallanodenarchitektur und ein Verfahren zur Herstellung derselben, wobei die Metallanodenschicht, ein Metall ausgewählt aus der Gruppe der Alkali- und Erdalkalimetalle ist, und der organische Schutzfilm das Reaktionsprodukt des Metalles und einer Elektronendonorverbindung enthält. Die Temperatur zur Herstellung des Schutzfilms kann dabei zwischen -20 und 60°C liegen, wobei die optimale Temperatur 25 ± 1°C beträgt. In den Beispielen wird z.T. eine Vorbehandlung mit Stickstoffgas vorgenommen, wobei die Kontaktzeit 1 oder 5 h beträgt. Das Verfahren wird auch anderweitig beschrieben (M. Wu, J. Power Sources 196 (2011) 8091), Es ist bekannt, dass metallisches Lithium bei milden Temperaturen nicht in nennenswertem Ausmaß mit trockenem Stickstoff reagiert. Deshalb kann metallisches Lithium in trockener Luft verarbeitet und beispielsweise zu dünnen Folien prozessiert werden. Der Stickstoffgehalt eines solcherart wenige Stunden mit Stickstoff kontaktierten Lithiummetalls liegt demzufolge sehr niedrig (<0,05 Gew.%).

Einige Verfahren nach Stand der Technik sind zwar in der Lage, ein gut handhabbares, gegenüber reaktiven Lösemitteln wie beispielsweise NMP kinetisch bis zu Temperaturen von etwa 60-80°C beständiges Pulver zur Verfügung stellen zu können, jedoch ist die Strombelastbarkeit daraus hergestellter Lithiumpulveranoden relativ schlecht. Dies kann mit der schlechten ionischen Leitfähigkeit der Oberflächenbeschichtungen zusammenhängen. Bei Verwendung der bekannten Coatingmittel bilden sich an der Grenzfläche zu metallischem Lithium sauerstoffhaltige Lithiumsalze, die nur eine äußerst geringe Leitfähigkeit aufweisen, d.h. die Isolatoren darstellen. So hat beispielsweise Lithiumoxid eine ionische Leitfähigkeit von lediglich 1,5 x 10⁻⁹ S/cm (B.A. Boukamp u. R.A.Huggins, Phys. Lett. 72A (1979) 464); für Li₃PO₄ wird ein Wert von 8,2 x 10⁻¹⁵ S/cm angegeben (A.M. Al-Rikabi, J. Chem. Soc. Pak. 11 (1989) 1-3).

Die Erfindung hat sich die Aufgabe gestellt, partikelförmige Lithiummetallabformungen mit einer passivierenden, aber gut ionisch leitfähigen Deckschicht sowie Verfahren zur Herstellung dieser Metallabformungen anzugeben. Solche Lithiummetallabformungen sollten in Gegenwart polarer, reaktiver Lösungsmittel, wie sie für die Herstellung von Elektrodenbeschichtungen eingesetzt werden, also beispielsweise NMP, mindestens bis etwa 50°C über viele Stunden und in Gegenwart von gängigen Flüssigelektrolytsystemen bis mindestens 100°C stabil sein.

Erfindungsgemäß wird die Aufgabe dadurch gelöst, dass die Lithiummetallabformung einen Kern aus metallischem Lithium enthält und dieser mit einer äußeren Schicht (Schale) enthaltend Stickstoff und gegebenenfalls Wasserstoff gemäß Anspruch 1 umgeben ist. Die erfindungsgemäßen Lithiummetallabformungen haben eine im wesentlichen sphärische Geometrie und werden durch Inkontaktbringen von metallischem Lithium mit einem oder mehreren stickstoffhaltigen Passivierungsmittel(n) ausgewählt aus den Gruppen
- N₂
- NₓH_{y} mit x = 1 oder 2 und y = 3 oder 4 oder
- einer nur die Elemente C, H und N sowie gegebenenfalls Li enthaltenden Verbindung
bei Temperaturen über der Lithiumschmelztemperatur, in einem organischen Lösungsmittel hergestellt. gemäß Anspruch 5. Die erfindungsgemäß hergestellten Produkte enthalten zwischen 0,01 und 10 Gew.%, bevorzugt 0,1 und 5 Gew.% Stickstoff, der sich im wesentlichen in der äußeren Schale befindet.

Als Lithiumquelle wird eine reine, d.h. insbesondere natriumarme Qualität verwendet. Solche Metallqualitäten sind als "Batteriequalität" im Handel. Der Na-Gehalt liegt < 200 ppm, bevorzugt < 100 ppm und besonders bevorzugt < 50 ppm.

Es wurde überraschend gefunden, dass bei der Verwendung natriumarmen Lithiummetalls ganz besonders stabile, sicher handhabbare Produkte gewonnen werden können. Durch Röntgendiffraktometrie wurde nachgewiesen, dass sich bei der Umsetzung zwischen Lithiummetall und einer oder mehrerer der genannten Verbindungen insbesondere Lithiumnitrid Li₃N und Tetralithiumammoniumhydrid [NLi₄]H bilden. Es ist bekannt, dass viele Stickstoff-Lithiumverbindungen bereits bei Raumtemperatur eine gute lonenleitfähigkeit aufweisen, z.B.:

| Lithiumverbindung | Ionische Leitfähigkeit (S/cm) | Literatur |
|---|---|---|
| Li₃N | 10⁻³ | U.v.Alpen, J. Solid State Chem. 29 (1979) 379-92 |
| Li₂NH | 3 × 10⁻⁴ | B.A. Boukamp, R.A.Huggins, Phys. Lett. 72A (1979) 464. |

Schmelzflüssiges Lithium wird verwendet, d.h. die Umsetzungstemperatur liegt bei min.

180,5°C und es werden im wesentlichen sphärische Lithiumpartikel (also Lithiumpulver oder -granulat bestehend aus kugelförmigen Partikeln) erzeugt und in geschmolzener Form mit einem oder mehreren der erfindungsgemäßen Passivierungsmittel behandelt.

Das Lithium wird zunächst unter Inertgas (Edelgas, beispielsweise trockenes Argon) in einem organischen, inerten Lösungsmittel oder Lösemittelgemisch (in der Regel kohlenwasserstoffbasiert) bis über die Schmelzpunkttemperatur des Lithiums (180,5°C) erwärmt. Dieser Prozess kann beim Einsatz von Lösungsmitteln mit Siedetemperaturen > 180°C (beispielsweise Undekan, Dodekan oder entsprechenden handelsüblichen Mineralölgemischen, beispielsweise Shellsole^{®}) bei Normaldruck erfolgen.

Werden demgegenüber leichter flüchtige Kohlenwasserstoffe wie z.B. Hexan, Heptan, Octan, Dekan, Toluol, Ethylbenzol oder Cumol eingesetzt, so erfolgt der Aufschmelzprozess in einem geschlossenen Gefäß unter Druckbedingungen. Nach dem vollständigen Aufschmelzen wird eine Emulsion des Metalls im Kohlenwasserstoff hergestellt. Je nach erwünschten Partikelgeometrien (Durchmesser) geschieht dies durch Homogenisieren mit Rührwerkzeugen, die die für die jeweilige Abformung notwendigen Scherkräfte einbringen. Da ein Pulver mit Partikelgrößen unter 1 mm hergestellt werden, soll, kann beispielsweise eine Dispergierscheibe verwendet werden. Die genauen Dispergierparameter (d.h. hauptsächlich die Rotationsgeschwindigkeit und die Dispergierzeit) richten sich nach der gewünschten Partikelgröße. Sie sind weiterhin von der Viskosität des Dispergierlösemittels sowie individuellen geometrischen Parametern des Rührorgans (z.B. Durchmesser, genaue Stellung und Größe der Zähnung) abhängig. Die Feinabstimmung des Dispergierverfahrens zur Bereitung der gewünschten Partikelverteilung kann der Fachmann durch entsprechende Experimente leicht bewerkstelligen.

Da Lithiumpartikel im Korngrößenbereich zwischen 5 und 200 µm hergestellt werden sollen, beträgt die Rührfrequenz im Allgemeinen zwischen 1.000 und 30.000 Umdrehungen pro Minute (upm), bevorzugt 2.000 bis 20.000 upm. Die Dispergierzeit, d.h. der Zeitraum, innerhalb dessen das Dispergierwerkzeug mit voller Leistung läuft, beträgt zwischen 1 und 60 Minuten, vorzugsweise 2 und 30 Minuten. Sind besonders feinteilige Partikeln erwünscht, so können höchsttourige Spezialwerkzeuge, die z.B. unter der Bezeichnung "Ultraturrax" im Handel erhältlich sind, verwendet werden. Es ist auch möglich, Lithiumdispersionen mit Hilfe einer Reaktionsmischpumpe herzustellen.

Das Passivierungsmittel kann bereits zusammen mit dem Metall und dem Lösungsmittel vor Beginn der Aufheizphase zugegeben werden. Bevorzugt wird es aber erst nach dem Aufschmelzen des Metalls, d.h. bei Temperaturen > 180,5°C zugegeben. Die Zugabe kann in einer Portion während des Dispergierprozesses erfolgen. Bevorzugt wird das Passivierungsmittel aber über einen Zeitraum von ca. 5 s bis 5000 s, besonders bevorzugt 30 s bis 1000 s zugegeben.

Die Partikelherstellung kann auch durch ein Verdüsungsverfahren bewerkstelligt werden (Vergleichsverfahren). In diesem Falle wird schmelzflüssiges Lithium in eine Inertgasatmosphäre (bestehend z.B. aus Argon) versprüht. Das nach Erkalten und Erstarren erhaltene Metallpulver kann dann in einem inerten organischen Lösungsmittel (in der Regel ein Kohlenwasserstoff) dispergiert und bei Temperaturen oberhalb von 60°C, aber unterhalb des Lithiumschmelzpunktes mit einem oder mehreren der erfindungsgemäßen Passivierungsmittel umgesetzt werden. Eine weitere Verfahrensvariante besteht darin, das schmelzflüssige Lithium in eine Atmosphäre enthaltend ein gasförmiges stickstoffhaltiges Coatingmittel einzudüsen.

Als Passivierungsmittel werden bevorzugt gasförmige Quellen von Stickstoff, besonders bevorzugt elementarer Stickstoff oder Ammoniak, flüssige Verbindungen wie Hydrazin oder Stoffe, die Stickstoff freizusetzen in der Lage sind, beispielsweise Metallazide, bevorzugt Lithiumazid (LiN₃) oder organische Azide (RN₃) eingesetzt. Weiterhin können stickstoffhaltige organische Stoffe, die neben den Elementen C, H Li und N keine weiteren chemischen Elemente enthalten, Verwendung finden. Beispiele sind primäre, sekundäre oder tertiäre aliphatischen Amine NR¹R²R³ mit R¹, R² = unabhängig voneinander H oder aliphatischer Rest mit 1-12 C-Atomen oder ein aromatischer Rest mit min. 6 C-Atomen und R³ = unabhängig voneinander ein aliphatischer Rest mit 1-12 C-Atomen oder ein aromatischer Rest mit min. 6 C-Atomen; stickstoffhaltige 3-6-gliedrige Heterocyclen wie z.B. Azirine, Aziridine, Pyrrolidine, Pyrrole, N-Methylpyrrol, Pyridine, Imidazol; oder Lithiumsalze eines primären oder sekundären aliphatischen oder aromatischen Amins, z.B. Lithiumdiisopropylamid; Lithiumpyrrolidid.

Die nicht-gasförmigen Passivierungsmittel werden entweder in reiner Form oder gelöst in einem gegenüber Lithiummetall inerten Lösungsmittel (also beispielsweise Kohlenwasserstoffen) oder einem wenig reaktiven aprotischen Lösemittel (beispielsweise einem Ether) zur Mischung aus Lithiummetall und dem aprotischen, inerten Lösungsmittel zugegeben. Nach Zugabe des Passivierungsmittels schließt sich eine Nachreaktionsphase an, während der die Umsetzung vervollständigt wird. Die Länge der Nachreaktionsphase hängt von der Umsetzungstemperatur und der Reaktivität des gewählten Passivierungsmittels gegenüber dem Lithiummetall ab.

Die erfindungsmäßen sphärischen Kern/Schale-strukturierten Metallpulverpartikel weisen mittlere Partikelgrößen zwischen 20 und 100 µm auf. Unter Annahme einer exakten Kugelgeometrie, der Annahme, dass der Stickstoff als Lithiumnitrid vorliegt und unter Kenntnis der Dichten von Lithiummetall und Lithiumnitrid (0,54 und 1,3 g/ml) kann die Dicke der stickstoffhaltigen Schale aus dem Stickstoffgehalt rechnerisch abgeschätzt werden. Beispielsweise weist ein erfindungsgemäß gecoatetes Metallpulver bestehend aus Partikeln, die einen Durchmesser von 50 µm aufweisen, bei Stickstoffgehalten von 0,1; 5; und 10 Gew.% eine Schalendicke von ca. 0,01; ca. 0,5 bzw. ca. 1,0 µm auf. Sphärische Lithiummetallpartikel mit Kern/Schale- Struktur erweisen sich als gut handhabbar und in polaren, aprotischen Lösungsmitteln als stabil, wenn sie eine stickstoffhaltige Schale mit einer Dicke zwischen 0,01 und 1 µm aufweisen.

Es ist auch möglich, eine mehrstufige Passivierung vorzunehmen, wobei mindestens bei einer Stufe eines oder mehrere stickstoffhaltigen Passivierungsmittel verwendet wird/werden. Beispielsweise kann zunächst eine Passivierung nach Stand der Technik mit Fettsäuren oder Fettsäureestern vorgenommen werden und das erhaltene partikuläre Lithiummetall durch ein Zusatzcoating mit einem stickstoffhaltigen Passivierungsmittel noch weiter stabilisiert werden. Diese Zusatzpassivierung wird beispielsweise in einem Kohlenwasserstofflösemittel im Temperaturbereich zwischen RT und 250°C, bevorzugt oberhalb von 60°C, aber unterhalb des Lithiumschmelzpunktes (also < 180,5°C) vorgenommen. Im Falle gasförmiger oder flüssiger stickstoffhaltiger Passivierungsmittel kann die Zusatzpassivierung aber auch durch Inkontaktbringen des vorpassivierten partikulären Lithiummetalls mit dem puren stickstoffhaltigen Coatingmitteln im Temperaturbereich zwischen RT und 250°C, bevorzugt oberhalb von 60°C, aber unterhalb des Lithiumschmelzpunktes (also < 180,5°C) erfolgen.

Die optimale Menge des für die Oberflächenbeschichtung verwendeten Passivierungsmittels richtet sich nach der Partikelgröße, der chemischen Struktur des Passivierungsmittels und der gewünschten Schichtdicke. Das Molverhältnis zwischen Li-Metall und Passivierungsmittel beträgt 100:0,01 bis 100:10, bevorzugt 100:0,05 bis 100:5. Beim Einsatz der bevorzugten Passivierungsmittelmenge resultieren Lithiummetallprodukte mit Gehalten > 80%, bevorzugt > 90%.

Natriumarme Lithiummetallpulver, die erfindungsgemäß passiviert worden sind, erweisen sich überraschend als ganz besonders stabil im Kontakt mit reaktiven, polaren Lösungsmitteln, beispielsweise N-Methyl-2-pyrrolidon.

Die erfindungsgemäßen Lithiummetallpulver zeigen im DSC-Test in Suspension mit N-Methyl-2-pyrrolidon (Wassergehalt < ca. 200 ppm) bei mindestens 15-stündiger Lagerung bei 50°C und besonders bevorzugt bei 80°C überraschenderweise keinen signifikanten exothermen Effekt, insbesondere kein "run-away-Phänomen". Dieses Verhalten wird anhand der folgenden Beispiele erläutert. Im Kontakt mit den für Lithiumbatterien üblichen Lösemitteln, beispielsweise Kohlensäureester und Elektrolyten, beispielsweise Lösungen der Leitsalze Lithiumhexafluorophosphat (LiPF₆) oder Lithium *bis*(oxalato)borat (LiBOB) sind die erfindungsgemäß passivierten Produkte bis mindestens 100°C, bevorzugt bis mindestens 120°C stabil.

Die erfindungsgemäßen passivierten sphärischen Lithiummetallpartikel können zur Vorlithiierung von elektrochemisch aktiven Materialien, z.B. Graphit-, Legierungs- oder Konversionsanoden für Lithiumbatterien oder in Kombination mit einer mechanisch-physikochemischen Vorbehandlung (Pressen, Abmischen mit Bindermaterialien etc.) für die Herstellung von Metallanoden für Lithiumbatterien verwendet werden.

Die Erfindung wird nachfolgend an Hand von drei Beispielen und einem Vergleichsbeispiel näher erläutert, ohne dass dadurch die beanspruchte Ausführungsbreite beschränkt werden soll.

Die Produktstabilität wird mittels DSC ("differential scanning calorimetry") bestimmt. Es kam eine Apparatur der Firma *Systag,* Schweiz (das Radex-System) zum Einsatz. In die Probengefäße wurden unter Schutzgasatmosphäre etwa 2 g NMP, Batterielösungsmittel oder Elektrolytlösung und 0,05 g des erfindungsgemäßen mit einem stickhaltigen Coatingmittel passivierten Lithiummetallpulvers eingewogen. Proben wurden bei bestimmten Temperaturen 15 h gelagert oder dynamisch bis zu einer bestimmten Endtemperatur, beispielsweise 250°C, erhitzt. Die Partikelgrößenverteilung wurde mit einem Gerät der Firma Mettler-Toledo, dem Lasentec-FBRM-in-line-Analysator, bestimmt. Die Temperatur, bei der eine thermischen Zersetzung beginnt, wird als Tₒₙₛₑₜ bezeichnet.

### Beispiel 1: Herstellung eines mit elementarem Stickstoff passivierten Lithiummetallpulvers

In einem trockenen mit Argon inertisierten 2 L-Edelstahldoppelmantelreaktor mit einem Dispergierrührwerk werden 499 g Shellsol^{®} D 100 und 20,3 g Lithiummetallstab-Abschnitte vorgelegt. Das Lithium hat einen Natriumgehalt von 40 ppm. Unter schwachem Rühren (ca. 50 upm) wird durch Mantelheizung die Innentemperatur auf ca. 205°C angehoben und mittels Dispergator eine Metallemulsion hergestellt. Dann wird über einen Zeitraum von 10 Minuten unter Dispergierbedingungen Stickstoff eingeleitet (ca. 0,1 L/60 s). Danach wird der DispergierRührer gestoppt und unter schwachem Rühren auf Umgebungstemperatur abgekühlt. Die Suspension wird auf eine Glasnutsche abgelassen, der Filterrückstand mehrmals mit Hexan ölfrei gewaschen und dann vakuumgetrocknet.
Ausbeute: 19,2 g (95 % d.Th.) feines graues Pulver
Mittlere Partikelgröße: 90 µm (FBRM-Partikelgrößenanalysator von Mettler-Toledo)
N-Gehalt: 4,8 Gew%
Metallgehalt: 86 % (gasvolumetrisch)
Verhalten an Luft: nicht pyrophor
Stabilität in NMP, Wassergehalt 167 ppm: 15 h stabil bei 80°C
Stabilität in LiPF₆, 10% in EC/EMC (1:1); EC/EMC (1:1) und 10% LiBOB in
EC/EMC (1:1): Tₒₙₛₑₜ = 150; 170; 190°C
Oberflächenuntersuchung per XRD: Phasenanteile von Li₃N und Li₄NH

### Beispiel 2: Herstellung eines kombiniert passivierten Lithiummetallpulvers (Coating mit elementarem Stickstoff und einem Silikonöl)

In einem trockenen mit Argon inertisierten 2 L-Edelstahldoppelmantelreaktor mit einem Dispergierrührwerk werden 501 g Shellsol^{®} D 100 und 20,8 g Lithiummetallstab-Abschnitte vorgelegt. Das Lithium hat einen Natriumgehalt von 40 ppm. Unter schwachem Rühren (ca. 50 upm) wird durch Mantelheizung die Manteltemperatur auf 240°C angehoben und mittels Dispergator eine Metallemulsion hergestellt. Dann werden 1,2 g Polydimethylsiloxan (CAS-Nr. 9016-00-6) gelöst in ca. 3 ml Shellsol^{®} D100 innerhalb von 3 Minuten mit einer Spritze zugegeben. Während der Zugabe wird mit starker Scherwirkung gerührt. Danach wird der Dispergierrührer gestoppt und 1 h lang Stickstoff eingeleitet (ca. 0,1 L/ 60 s). Dann wir die Suspension auf Zimmertemperatur abgekühlt.

Sie wird auf eine Glasnutsche abgelassen, der Filterrückstand mehrmals mit Hexan ölfrei gewaschen und dann vakuumgetrocknet.
Ausbeute: 21,8 g (105% d. Th.)
Mittlere Partikelgröße D₅₀ = 59 µm (FBRM-Partikelgrößenanalysator von Mettler-Toledo)
Metallgehalt: 95 % (gasvolumetrisch)
Stabilität in NMP, Wassergehalt 167 ppm: 15 h stabil bei 80°C
Si-Gehalt: 0,056 Gew.%
N-Gehalt: 0,93 Gew.%
Oberflächenuntersuchung per XRD: geringe Phasenanteile von Li₃N und Li₄NH

### Beispiel 3: Herstellung eines mit Pyrrol gecoateten natriumarmen Lithiumpulvers

In einem trockenen mit Argon inertisierten 2 L-Edelstahldoppelmantelreaktor mit einem Dispergierrührwerk werden 501 g Shellsol^{®} D 100 und 20,4 g Lithiummetallstab-Abschnitte vorgelegt. Das Lithium hat einen Natriumgehalt von 40 ppm. Unter schwachem Rühren (ca. 50 upm) wird durch Mantelheizung die Innentemperatur auf 204°C angehoben und mittels Dispergator eine Metallemulsion hergestellt. Dann werden 1,0 g Pyrrol innerhalb von ca. 3 Minuten mit einer Spritze zugegeben. Während der Zugabe wird mit starker Scherwirkung gerührt. Es wird noch 60 Minuten bei einer Manteltemperatur von etwa 210°C schwach nachgerührt, der Rührer dann gestoppt und die Suspension auf Zimmertemperatur abgekühlt.

Die Suspension wird auf eine Glasnutsche abgelassen, der Filterrückstand mehrmals mit Hexan ölfrei gewaschen und dann vakuumgetrocknet.
Ausbeute: 20,9 g (102 % d.Th.)
Mittlere Partikelgröße D₅₀ = 57 µm (FBRM-Partikelgrößenanalysator von Mettler-Toledo)
Metallgehalt: 92 % (gasvolumetrisch)
Stabilität in NMP, Wassergehalt 167 ppm: 15 h stabil bei 60°C;
Stabilität in LiPF₆, 10% in EC/EMC (1:1); EC/EMC (1:1) und 10% LiBOB in EC/EMC (1:1): Tₒₙₛₑₜ = 135; 145; 185°C
N-Gehalt: 0,71 Gew%
Oberflächenuntersuchung per XRD: geringe Phasenanteile von Li₃N und einer unbekannten Phase

### Vergleichsbeispiel 1: Reaktivität von kommerzieller Lithiummetallfolie gegenüber trockener Luft

In einem Trockenraum mit einem Taupunkt von -40°C und Temperaturen um 25°C wurden 38,072 g Lithiummetallfolie, Batteriequalität, in einer offenen Glasschale gelagert. Nach bestimmten Zeitabständen wurde die Schale gewogen:

| Lagerdauer (Stunden) | Gewichtsveränderung (%) |
|---|---|
| 1 | 0,01 |
| 2 | 0,02 |
| 7 | 0,03 |
| 53 | 0,06 |
| 101 | 0,09 |

Aus den Messdaten geht hervor, dass Lithiumfolie in trockener Luft nur äußerst langsam mit Stickstoff reagiert. Der Gewichtszuwachs entspricht der Aufnahme der Reaktivbestandteile der Luft (also der Summe zurückgehend auf die Reaktion mit Sauerstoff, Stickstoff, Kohlendioxid und Restwassergehalt). In reiner Stickstoffatmosphäre ist die Gewichtszunahme noch deutlich geringer.

## Patentansprüche

1. Stabilisiertes partikuläres Lithiummetall, **dadurch gekennzeichnet, dass** die Lithiumpartikel Korngrößen im Bereich zwischen 5 und 200 µm, bestimmt mit einem Lasentec-FBRM-in-line-Analysator, eine im wesentlichen sphärische Geometrie und einen Kern aus metallischem Lithium mit einen Natriumgehalt < 200 ppm aufweisen und mit einer äußeren passivierenden stickstoffhaltigen Schicht umgeben sind, wobei das stabilisierte partikuläre Lithiummetall bei Stickstoffgehalten von 0,01 bis 10 Gew.% eine äußere passivierende stickstoffhaltige Schicht aufweist, die Lithiumnitrid Li₃N und Tetralithiumammoniumhydrid (NLi₄)H enthält und eine Dicke zwischen 0,01 und 1 µm aufweist.

2. Stabilisiertes partikuläres Lithiummetall nach Anspruch 1, **dadurch gekennzeichnet, dass** es einen Natriumgehalt < 100 ppm aufweist.

3. Stabilisiertes partikuläres Lithiummetall nach Anspruch 2, **dadurch gekennzeichnet, dass** es einen Natriumgehalt < 50 ppm aufweist.

4. Stabilisiertes partikuläres Lithiummetall nach Anspruch 1 bis 3, **dadurch gekennzeichnet, dass** es 0,1 bis 5 Gew% Stickstoff enthält.

5. Verfahren zur Herstellung einer stabilisierten Lithiummetallabformung bestehend aus im wesentlichen sphärischen Partikeln, **dadurch gekennzeichnet, dass** Lithiummetall mit einen Natriumgehalt < 200 ppm mit einem oder mehreren stickstoffhaltigen Passivierungsmittel(n) ausgewählt aus den Gruppen
• N₂
• NₓH_{y} mit x = 1 oder 2 und y = 3 oder 4 oder
• einer nur die Elemente C, H und N sowie gegebenenfalls Li-enthaltenden Verbindung
bei Temperaturen über der Lithiumschmelztemperatur von 180,5°C in einem organischen, inerten Lösungsmittel unter Homogenisierung mit Rührwerkzeugen bei einer Rührfrequenz zwischen 1.000 und 30.000 Umdrehungen pro Minute zwischen 1 und 60 Minuten unter Bildunq von Lithiumpartikeln im Korngrößenbereich zwischen 5 und 200 µm, bestimmt mit einem Lasentec-FBRM-in-line-Analysator, in Kontakt gebracht wird, wobei das Molverhältnis zwischen Li-Metall und Passivierungsmittel 100:0,01 bis 100:10 beträgt.

6. Verfahren nach Anspruch 5 , **dadurch gekennzeichnet, dass** als stickstoffhaltige Passivierungsmittel gasförmige Quellen von Stickstoff, besonders bevorzugt elementarer Stickstoff oder Ammoniak, flüssige Verbindungen wie Hydrazin oder Stoffe, die Stickstoff freizusetzen in der Lage sind, beispielsweise Metallazide, bevorzugt Lithiumazid (LiN₃) oder organische Azide (RN₃) eingesetzt werden.

7. Verfahren nach Anspruch 5 oder 6 , **dadurch gekennzeichnet, dass** als stickstoffhaltige Coatingmittel organische Stoffe, die neben den Elementen C, H und N sowie gegebenenfalls Li keine weiteren chemischen Elemente enthalten, Verwendung finden, beispielsweise primäre, sekundäre oder tertiäre aliphatischen Amine NR¹R²R³ mit R¹, R² = unabhängig voneinander H oder aliphatischer Rest mit 1 bis 12 C-Atomen oder ein aromatischer Rest mit mindestens 6 C-Atomen und R³ = unabhängig voneinander ein aliphatischer Rest mit 1 bis 12 C-Atomen oder ein aromatischer Rest mit mindestens 6 C-Atomen; stickstoffhaltige 3 bis 6-gliedrige Heterocyclen wie z.B. Azirine, Aziridine, Pyrrolidine, Pyrrole, N-Methylpyrrol, Pyridine, Imidazol; oder Lithiumsalze eines primären oder sekundären aliphatischen oder aromatischen Amins, z.B. Lithiumdiisopropylamid; Lithiumpyrrolidid.

8. Verfahren nach einem oder mehreren der Anspruche 5 bis 7, **dadurch gekennzeichnet, dass** das Molverhältnis zwischen Li-Metall und Passivierungsmittel 100:0,05 bis 100:5 beträgt.

9. Verfahren nach einem oder mehreren der Ansprüche 5 bis 8, **dadurch gekennzeichnet, dass** als inertes, organisches Lösungsmittel Kohlenwasserstoffe, ausgewählt aus der Gruppe bestehend aus Hexan, Heptan, Octan, Dekan, Undekan, Dodekan, Toluol, Ethylbenzol, Cumol, entweder in reiner Form oder im Gemisch als kommerziell erhältliche Siedeschnitte eingesetzt werden.

## Claims

1. Stabilized particulate lithium metal, **characterized in that** the lithium particles have grain sizes in the range between 5 and 200 µm, determined with a Lasentec FBRM in-line analyzer, an essentially spherical geometry and a core composed of metallic lithium with a sodium content <200 ppm, and are enclosed by an outer passivating layer containing nitrogen, wherein the stabilized particulate lithium metal with nitrogen contents of 0.01 to 10 wt% has an outer passivating nitrogen-containing layer containing lithium nitride LiN₃ and tetralithium ammoniumhydride (NLi₄)H and having a thickness of 0.01 to 1 µm.

2. Stabilized particulate lithium metal according to claim 1, **characterized in that** it has a sodium content of <100 ppm.

3. Stabilized particulate lithium metal according to claim 2, **characterized in that** it has a sodium content of <50 ppm.

4. Stabilized particulate lithium metal according to claim 1 to 3, **characterized in that** it contains 0.1 to 5 % by weight of nitrogen.

5. A method for producing a stabilized lithium metal impression consisting of essentially spherical particles, **characterized in that** lithium metal with a sodium content <200 ppm is contacted with one or more nitrogen-containing passivating agent (s) selected from the groups
• N₂
• NₓH_{y} with x = 1 or 2 and y = 3 or 4 or
• a compound containing only the elements C, H and N and optionally Li
at temperatures above the lithium melting temperature of 180.5°C in an organic, inert solvent with homogenization using stirring devices at a stirring frequency between 1,000 and 30,000 rounds per minute for 1 to 60 minutes to form lithium particles in the grain size range between 5 and 200 µm, determined with a Lasentec FBRM in-line analyzer, the molar ratio between Li metal and passivating agent being 100:0.01 to 100:10.

6. The method according to claim 5, **characterized in that** gaseous sources of nitrogen, particularly preferably elemental nitrogen or ammonia, liquid compounds such as hydrazine or substances that are capable of releasing nitrogen, for example metal azides, preferably lithium azide (LiN₃) or organic azides (RN₃), are used as nitrogen-containing passivating agents.

7. The method according to claim 5 or 6, **characterized in that** organic substances that contain no further chemical elements besides the elements C, H and N and optionally Li are used as nitrogen-containing coating agents, for example primary, secondary or tertiary aliphatic amines NR¹R²R³ with R¹, R² = independently of one another H or an aliphatic radical with 1 to 12 carbon atoms or an aromatic radical with at least 6 carbon atoms and R³ = independently of one another an aliphatic radical with 1 to 12 carbon atoms or an aromatic radical with at least 6 carbon atoms Atoms; nitrogen-containing 3 to 6-membered heterocycles such as azirines, aziridines, pyrrolidines, pyrroles, N-methylpyrrole, pyridines, imidazole; or lithium salts of a primary or secondary aliphatic or aromatic amine, e.g., lithium diisopropylamide; lithium pyrrolidide.

8. The method according to one or more of claims 5 to 7, **characterized in that** the molar ratio between Li metal and passivating agent is 100:0.05 to 100:5.

9. The method according to one or more of claims 5 to 8, **characterized in that** hydrocarbons selected from the group consisting of hexane, heptane, octane, decane, undecane, dodecane, toluene, ethylbenzene, cumene, either in in pure form or in a mixture as commercially available boiling cuts, are used as the inert organic solvent.

## Revendications

1. Lithium métallique, en particules et stabilisé, **caractérisé en ce que** les particules de lithium présentent une taille située dans l'intervalle allant de 5 à 200 µm, taille mesurée au moyen d'un analyseur Lasentech FBRM en ligne, et une forme pratiquement sphérique, comportent un noyau de lithium métallique contenant moins de 200 ppm de sodium, et sont enrobées d'une couche externe azotée de passivation, étant entendu que le lithium métallique en particules et stabilisé comporte, avec une teneur en azote de 0,01 à 10 % en poids, une couche externe azotée de passivation qui contient du nitrure de lithium Li₃N et de l'hydrure de tétralithio-ammonum (NLi₄)H et présente une épaisseur de 0,01 à 1 µm.

2. Lithium métallique, en particules et stabilisé, conforme à la revendication 1, **caractérisé en ce qu'**il présente une teneur en sodium inférieure à 100 ppm.

3. Lithium métallique, en particules et stabilisé, conforme à la revendication 2, **caractérisé en ce qu'**il présente une teneur en sodium inférieure à 50 ppm.

4. Lithium métallique, en particules et stabilisé, conforme à l'une des revendications 1 à 3, **caractérisé en ce qu'**il contient de 0,1 à 5 % en poids d'azote.

5. Procédé de préparation d'une forme de lithium métallique stabilisé constituée de particules pratiquement sphériques, **caractérisé en ce qu'**on met du lithium métallique, contenant moins de 200 ppm de sodium, en contact avec un ou plusieurs agent(s) azoté(s) de passivation, choisi(s) dans l'ensemble formé par les suivants :
- N₂,
- NₓH_{y}, où x vaut 1 ou 2 et y vaut 3 ou 4,
- un composé ne contenant que les éléments carbone, hydrogène et azote, ainsi que, éventuellement, du lithium,
à une température supérieure à la température de fusion du lithium, qui est de 180,5 °C, dans un solvant organique inerte, avec homogénéisation au moyen d'un agitateur tournant à une vitesse de 1000 à 3000 tours par minute durant 1 à 60 minutes, et avec formation de particules de lithium de taille située dans l'intervalle allant de 5 à 200 µm, taille mesurée au moyen d'un analyseur Lasentech FBRM en ligne, le rapport molaire entre le lithium métallique et l'agent de passivation valant de 100/0,01 à 100/10.

6. Procédé conforme à la revendication 5, **caractérisé en ce que** l'on utilise, en tant qu'agent azoté de passivation, des sources gazeuses d'azote, avec une préférence particulière pour de l'azote élémentaire ou de l'ammoniac, des composés liquides, comme de l'hydrazine, ou des substances qui sont capables de libérer de l'azote, par exemple des azotures de métal, de préférence de l'azoture de lithium LiN₃, ou des azotures organiques RN₃.

7. Procédé conforme à la revendication 5 ou 6, **caractérisé en ce que** l'on utilise, en tant qu'agent azoté de revêtement, des substances organiques qui ne contiennent pas d'autres éléments chimiques que les éléments carbone, hydrogène et azote, et éventuellement lithium, par exemple des amines aliphatiques primaires, secondaires ou tertiaires, de formule NR¹R²R³ dans laquelle les symboles R¹ et R² représentent, indépendamment l'un de l'autre, un atome d'hydrogène ou un groupe aliphatique comportant de 1 à 12 atomes de carbone ou un groupe aromatique comportant au moins 6 atomes de carbone, et R³ représente, indépendamment, un groupe aliphatique comportant de 1 à 12 atomes de carbone ou un groupe aromatique comportant au moins 6 atomes de carbone ; des composés hétérocycliques azotés dont le cycle comporte de 3 à 6 chaînons, tels, par exemple, les azirine, aziridine, pyrrolidine, pyrrole, N-méthyl-pyrrole, pyridine et imidazole ; ou des sels de lithium d'une amine primaire ou secondaire, aliphatique ou aromatique, par exemple du diisopropyl-amidure de lithium ou du pyrrolididure de lithium.

8. Procédé conforme à l'une ou plusieurs des revendications 5 à 7, **caractérisé en ce que** le rapport molaire entre le lithium métallique et l'agent de passivation vaut de 100/0,05 à 100/5.

9. Procédé conforme à l'une ou plusieurs des revendications 5 à 8, **caractérisé en ce que** l'on utilise, en tant que solvant organique inerte, un hydrocarbure choisi dans l'ensemble formé par les hexane, heptane, octane, décane, undécane, dodécane, toluène, éthyl-benzène et cumène, soit à l'état pur, soit sous forme de mélange en tant que coupe de distillation disponible dans le commerce.
